Europäisches Patentamt

**European Patent Office**

**Office européen des brevets**

(11) Numéro de publication: **0 264 327 B1**

# FASCICULE DE BREVET EUROPEEN

(45) Date de publication de fascicule du brevet:
**03.04.91**

(51) Int. Cl.⁵: **C03B 5/187**

(21) Numéro de dépôt: **87402241.1**

(22) Date de dépôt: **08.10.87**

(54) **Procédé et dispositif pour la fusion du verre.**

(30) Priorité: **13.10.86 FR 8614172**

(43) Date de publication de la demande:
**20.04.88 Bulletin 88/16**

(45) Mention de la délivrance du brevet:
**03.04.91 Bulletin 91/14**

(84) Etats contractants désignés:
**AT BE CH DE ES FR GB IT LI LU NL SE**

(56) Documents cités:
**FR-A- 792 996**
**FR-A- 2 213 914**
**US-A- 2 394 893**
**US-A- 4 195 981**

(73) Titulaire: **SAINT-GOBAIN VITRAGE INTERNA-
TIONAL**
**18, avenue d'Alsace**
**F-92400 Courbevoie(FR)**

(72) Inventeur: **Delage, Robert**
**35 Place de la République Pimprez**
**F-60170 Ribecourt(FR)**
Inventeur: **Boillet, Jacques**
**7 Rue H. Mesnil**
**F-60200 Compiegne(FR)**
Inventeur: **Cadier, Marcel**
**14 Allée de Normandie**
**F-78140 Velizy-Villacoublay(FR)**

(74) Mandataire: **Muller, René et al**
**SAINT-GOBAIN RECHERCHE 39, quai Lucien
Lefranc**
**F-93304 Aubervilliers(FR)**

## Description

La présente invention concerne la fabrication du verre plat par flottage et en particulier la préparation par fusion, affinage et homogénéisation de la masse de verre à couler sur le bain de flottage.

Un des problèmes recontrés dans la fabrication du verre plat par flottage est l'homogénéisation de la masse de verre apte à être coulée sur le bain de métal en fusion du four de flottage, en particulier lorsque le four de flottage travaille avec des tirées voisines du maximum de capacité notamment pour fabriquer du verre de couleur. Lorsque l'homogénéisation n'est pas très bonne, on observe des stries et des ondes dans la feuille de verre fabriquée. Le problème d'homogénéisation est encore accentué lors des transitions d'un type de verre à un autre, c'est-à-dire lors d'un changement de couleur. Une mauvaise homogénéisation de la masse de verre coulée augmente considérablment la durée de transition au cours de laquelle le verre est transformé en calcin.

Plusieurs solutions ont déjà été proposées pour résoudre ce problème d'homogénéisation de la masse de verre à couler. Ainsi, on a proposé d'introduire dans le bassin de fusion des barrages mécaniques ou thermiques pour obliger les courants de verre à passer par des ouvertures ménagées en profondeur dans le bain de verre.

On a aussi proposé d'effectuer un brassage du verre en fusion au moyen d'agitateurs. Par exemple dans la publication du certificat d'addition français 2 287 423, on a proposé de brasser le verre en fusion à l'aide d'agitateurs verticaux traversant la voûte du four.

Ce dispositif, efficace en ce qui concerne l'homogénéisation du verre est d'une mise en oeuvre compliquée. Sa maintenance est en outre difficile car les pièces mécaniques qui le constitue travaillent au dessus de la voûte du four donc à haute température et se détériorent rapidement.

Dans la publication du brevet français FR-A-2 213 914, on décrit un procédé et un dispositif selon les préambules des revendications 1 et 2. Selon ce procédé on modifie l'écoulement du verre fondu dans la région d'affinage et à partie de celle-ci vers la région de travail encore appelée zone d'homogénéisation ou zone de braise, de manière à améliorer l'homogénéité du verre en faisant circuler un liquide de refroidissement dans une ou plusieurs conduites qui s'étendent en substance horizontalement en travers d'au moins une partie du bassin dans la région supérieure du verre fondu, à la jonction de la région d'affinage avec la région de travail ou près de celle-ci et en effectuant un déplacement horizontal transversal du verre fondu dans le courant de verre par déplacement selon un mouvement de va et vient de la conduite ou des conduites. L'efficacité de ce dispositif n'est pas entièrement satisfaisante et les durées de transition en particulier restent élevées.

Dans la publication de brevet français FR-A-792 996, on décrit aussi une agitation horizontale à l'aide d'un bras muni de plusieurs doigts de forme cylindrique. L'efficacité de ce dispositif n'est pas entièrement satisfaisante.

Tous ces dispositifs connus ne donnent pas entière satisfaction. Ils sont d'une utilisation compliquée ou d'une efficacité discutable.

L'invention propose un procédé et un dispositif à agitation horizontale qui obvie aux inconvénients cités, en particulier en étant faciles à mettre en oeuvre, et en permettant de diminuer les durées de transition lors du passage d'un verre à un autre.

Selon le procédé de l'invention, dans un four pour la fusion du verre avec un bassin comportant une zone de fusion, une zone d'affinage et une zone d'homogénéisation ou de braise séparée de la zone d'affinage par une zone intermédiaire qui se présente généralement sous la forme d'un étranglement ou corset, on agite au moins la partie supérieure de la masse de verre en fusion dans la zone intermédiaire ou juste à côté, sur essentiellement toute la largeur du bassin, par une agitation horizontale selon un mouvement elliptique, par au moins un agitateur formé d'une série de boucles essentiellement verticales, le plan de chaque boucle étant incliné par rapport à l'axe de l'agitateur.

Le dispositif selon l'invention comprend un four pour la fusion du verre avec un bassin comportant une zone de fusion, une zone d'affinage et une zone d'homogénéisation séparée de la zone d'affinage par une zone intermédiaire qui se présente généralement sous la forme d'un corset et des moyens d'agitation de la masse de verre en fusion au niveau de la zone intermédiaire ou juste à côté, ces moyens étant constitués d'au moins un agitateur horizontal s'étendant sur essentiellement toute la largeur du bassin, de moyens procurant à chacun des points de l'agitateur un mouvement elliptique dans un plan horizontal, l'agitateur étant formé d'une série de boucles essentiellement verticales qui, avantageusement, peuvent être surmontées d'un tube horizontal. Dans une réalisation préférée, le plan de chaque boucle est incliné par rapport à l'axe de l'agitateur et du tube horizontal. Différentes formes géométriques de boucles, dont le choix dépend de l'efficacité recherchée pour l'agitation, peuvent convenir.

Selon une caractéristique de l'invention, l'agitateur est formé d'une série de tubes formant une conduite continue dans laquelle circule un fluide de refroidissement par exemple de l'eau.

Les moyens procurant à l'agitateur un mouvement elliptique sont disposés à l'extérieur du four. Ils comprennent par exemple une table à mouvements croisés comme décrit plus en détail par la suite.

Selon une réalisation du dispositif de l'invention, celui-cicomprend deux agitateurs analogues dont le mouvement est synchronisé, chacun d'eux opérant sur essentiellement la moitié du bain de verre en fusion au niveau de leur emplacement et étant monté chacun d'un côté du four. Les deux agitateurs sont avantageusement décalés légèrement l'un par rapport à l'autre pour éviter qu'ils ne s'entrechoquent en cas d'un mauvais fonctionnement du système de synchronisation. Il faut également prévoir un recouvrement d'au moins une partie des organes agissant des deux agitateurs de manière à ne pas laisser une zone centrale non brassée. Cette réalisation a deux agitateurs, bien qu'elle nécessite une synchronisation pour leur fonctionnement est plus facile à installer et à retirer le cas échéant.

L'agitateur (ou les deux) peut être partiellement ou totalement immergé dans le bain. Dans ce dernier cas, lorsqu'il comporte un tube horizontal, il forme un barrage pour le courant de verre supérieur.

Pour faciliter la manipulation des agitateurs, ils sont avantageusement montés sur un chariot circulant sur des rails perpendicularisés à l'axe du four.

D'autres avantages et caractéristiques de l'invention apparaitront dans la description suivante d'exemples de réalisation du dispositif selon l'invention.

La figure 1 est une vue en plan de l'ensemble du bassin de fusion équipé d'un agitateur à boucles animé d'un mouvement elliptique.

La figure 2 est une vue en coupe transversale de la figure 1 au niveau du corset.

La figure 3 représente une vue en plan du corset d'un bassin de fusion équipé de deux agitateurs légèrement décalés l'un par rapport à l'autre.

La figure 4 est une vue en coupe transversale du bassin équipé des deux agitateurs, schématisé sur la figure 3.

La figure 5 représente l'agitateur à boucles utilisé dans la variante à deux agitateurs.

La figure 6 représente en vue de dessus l'agitateur de la figure 5.

La figure 7 représente une boucle de l'agitateur en vue de plan.

La figure 8 représente en élévaton le mécanisme procurant à un agitateur son mouvement elliptique.

La figure 9 est une vue de côté du mécanisme de la figure 8.

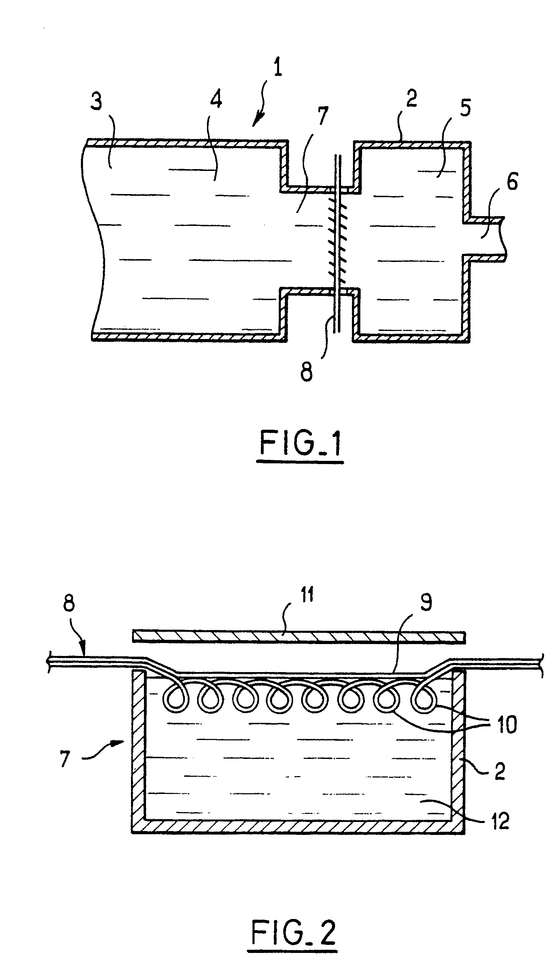

La figure 1 représente en vue de plan le bassin de fusion 1 du four comportant des parois rétractai res 2 présentant un compartiment amont 3 dans lequel s'effectue la fusion de la composition verriere, suivi d'un compartiment 4 dans lequel s'effectue l'affinage du verre, un compartiment aval 5 dans lequel s'effectue la dernière homogénéisation, notamment en température de la masse de verre en fusion précédant le canal de sortie 6 et la coulée. Entre le compartiment d'homogénéisation 5 et le compartiment d'affinage 4, le bassin présente un étranglement ou corset 7. Dans la partie aval de ce corset s'étend transversalement un agitateur horizontal 8 dont la partie agissante située dans le corset est formée d'un tube horizontal 9, surmontant une série de boucles 10, dont le plan est incliné par rapport à l'axe du tube horizontal. L'ensemble de l'agitateur est formé d'une série de tubes formant une conduite parcourue par de l'eau pour le refroidissement. L'agitateur traverse les parois latérales 2 du corset 7 et il est relié à des moyens décrits par la suite lui procurant un mouvement d'agitation elliptique dans le plan horizontal.

Sur la figure 2, l'agitateur est représenté dans une position de travail, dans le corset 7 sous la voûte 11 du four. Les boucles 10 sont immergées totalement dans le verre en fusion 12. Le tube horizontal 9 est ici partiellement immergé dans le verre, de sorte qu'il agit comme barrage pour le courant de verre supérieur.

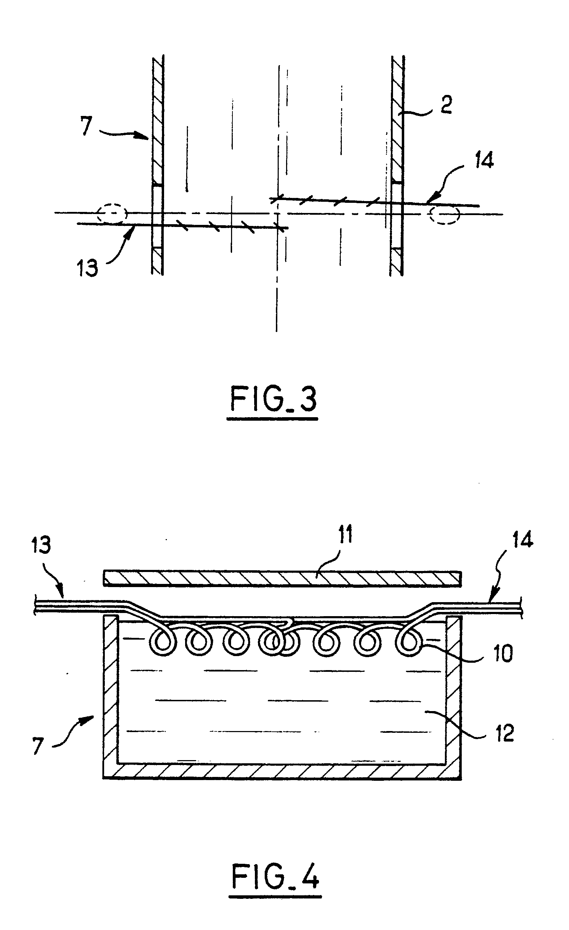

Sur la figure 3 sont représentés schématiquement deux agitateurs 13, 14 travaillant en phase dans la variante à deux agitateurs.

L'axe de chaque agitateur est faiblement incliné et dans des sens différents par rapport à la perpendiculaire au four. On évite ainsi que les extrémités des agitateurs ne s'entrechoquent lors d'une mauvaise synchronisation du mouvement elliptique des deux agitateurs.

Les pointillés schématisent le trajet horizontal elliptique des points de fixation des agitateurs sur les moyens moteurs.

La figure 4 représente la section du bassin avec les deux agitateurs à boucles 13, 14 dont les extrémités se recouvrent en dépassant l'axe du four.

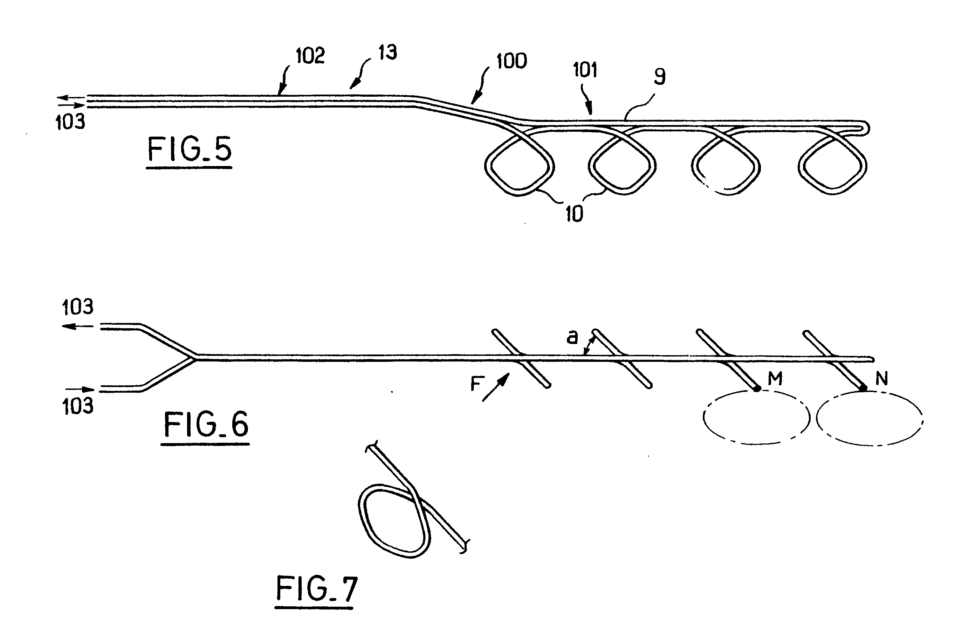

Sur les figures 5 et 6, est représenté un exemple d'un agitateur à boucles. Cet agitateur est formé d'une succession de tubes formant une conduite continue dont la partie inférieure présente quatre boucles 10, régulièrement séparées alors que la partie supérieure est un tube horizontal 9. Le nombre de boucles ainsi que leurs dimensions peuvent bien entendu varier en fonction des dimensions du corset.

Comme représenté sur la figure 7 qui est une vue selon F de la figure 6, dans la réalisation décrite, chaque boucle présente la forme approximative d'une ellipse dont le grand axe peut varier entre 300 et 500 mm environ et le petit axe entre 150 et 400 mm environ. Les boucles sont formées d'un tube dont le diamètre est d'environ 40mm.

Dans la conduite c'est-à-dire dans l'ensemble de l'agitateur circule un liquide réfrigérant généralement de l'eau. Le débit de l'eau est d'environ 10 à 20 m³/heure..

L'agitateur présente un coude 100 entre la partie 101 destinée à être placée dans le corset et la partie 102 destinée à être placée à l'extérieur et qui est supportée par les moyens moteurs non représentés ici et décrits par la suite.

Ce coude permet un trempage partiel ou total de la partie active de l'agitateur dans le bain de verre en fusion tout en permettant un passage de l'agitateur à travers la paroi réfractaire du corset, à un niveau supérieur au niveau du verre.

Le plan vertical des boucles est incliné par rapport à l'axe de tube supérieur. L'angle d'inclinaison a peut varier selon les dimensions des boucles. Il peut être d'environ 30°.

L'agitateur est refroidi lors de son utilisation par une circulation d'eau 103 qui passe dans les boucles 10 avant de revenir par le tube 9.

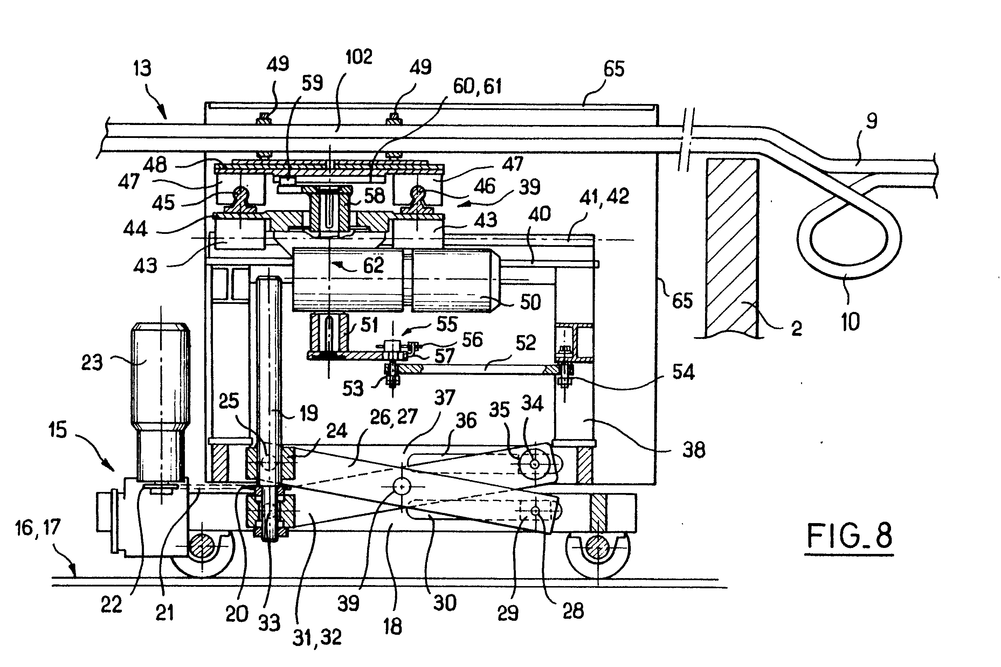

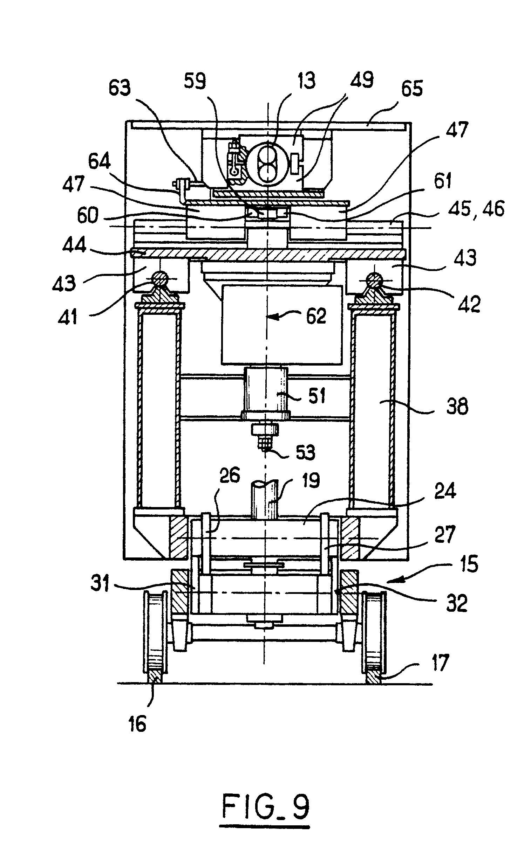

Le dispositif procurant à chaque point d'un agitateur un mouvement de forme elliptique dans le plan horizontal comme représenté pour les points M et N, e st décrit en relation avec les figures 8 et 9.

Le dispositif est monté sur un chariot 15 monté lui-même sur deux rails 16, 17 perpendiculaires à l'axe du four, afin de faciliter la mise en place de l'agitateur et son retrait. Sur le chassis 18 du chariot est monté l'extrémité d'une vis verticale 19 portant un pignon 20 qui l'entraine en rotation, en étant lui-même entrainé par l'intermédiaire d'une chaine 21 par un pignon 22 monté au bout de l'arbre d'un moteur électrique 23. Sur la vis 19 est monté un écrou 24 relié par l'intermédiaire d'axes 25 à l'extrémité de deux bielles 26, 27.

L'autre extrémité des deux bielles est portée par un axe 28 solidaire d'un coulisseau 29 coulissant dans une fenêtre 30 du chassis 18. Deux autres bielles 31, 32 sont portées d'une part par un axe 33 fixé au chassis 18, et d'autre part, à un axe 34 solidaire d'un coulisseau 35 coulissant dans une fenêtre 36 d'une table élévatrice 37 constituant la partie inférieure d'un bâti 38. La table élévatrice 37 est soulevée par l'action du moteur électrique 23, le guidage s'effectuant par l'intermédiaire des bielles 26, 27, 31, 32 articulées toutes quatre autour d'un axe transversal et horizontal 39. La course de la table élévatrice 37 et du bâti 38 est d'environ 500 à 600 mm. Cette course est utilisée pour faire passer les boucles 10 de l'agitateur par l'ouverture de la paroi réfractaire 2 du corset et plonger ensuite l'agitateur dans le bain de verre en fusion. Sur la partie supérieure du bâti 38 est montée une table 39 à mouvements croisés. Cette table comprend un socle 40 porteur de deux rails 41, 42 perpendiculaires à l'axe du four. Sur ces rails coulissent quatre paliers 43 porteurs d'un plateau 44 qui lui même porte deux rails 45, 46 perpendiculaires aux premiers 41, 42, c'est-à-dire orientés sensiblement selon l'axe du four. Sur ces rails coulissent quatre autres paliers 47 porteurs d'un plateau 48 sur lequel est fixé l'extrémité 102 de l'agitateur 13 à l'aide de coquilles de serrage 49.

Sous le plateau 44 est fixé solidairement un moteur électrique 50. La sortie du moteur 50 est munie d'un bras rotatif 51 relié à une beille horizontale 52 par un axe vertical 53. L'autre extrémité de la bielle 52 est articulée autour d'un axe vertical 54 porté par le bâti 38. La rotation du moteur 50 entraine la rotation du bras 51 autour de l'axe 53 et le déplacement de la table 39 le long des rails 45, 46.

La course de ce déplacement peut être modifiée par une variation de l'écartement de l'axe 53 avec l'arbre moteur d'axe 62 à l'aide d'un système 55 muni d'une tige de réglage 56 portée par un bras 57 situé à l'extrémité du bras rotatif 51.

La course de la table peut par exemple varier de 350 à 450 mm. La sortie supérieure de l'arbre moteur est reliée à un autre bras rotatif 58 dont l'extrémité porte un coulisseau 59 qui est placé entre deux glissières 60, 61 solidaires du plateau 48.

La distance du coulisseau par rapport à l'axe 62 de l'arbre moteur peut être réglée à l'aide d'une tige filetée 63, portée par un bras 64.

Ce montage permet une course de la table dans la direction de l'axe du four de 150 à 300 mm environ. Ces valeurs de course sont données à titre indicatifs, elles peuvent varier selon une gamme très étendu de trajectoires elliptiques.

Le dispositif est recouvert d'un panneau de protection 65.

La fréquence de rotation des agitateurs, c'est-à-dire le nombre du trajets elliptiques parcouru par un point de l'agitateur peut varier par exemple de 2 à 10 par minute. La quantité de verre brassé est, dans l'exemple de réalisation, supérieure à 1 m³ à chaque rotation.

L'efficacité du dispositif selon l'invention peut être mise en évidence, notamment par le fait que ce dispositif permet de réduire la durée de transition, d'un verre à un autre, de plusieurs heures par rapport à un agitateur fixe animé d'un simple mouvement de va et vient.

**Revendications**

1. Procédé pour la fusion du verre avant la coulée sur un bain de flottage, dans un four de fusion (1) ayant un bassin comportant une zone de fusion (3), une zone d'affinage (4) et une zone d'homogénéisation (5) séparée de la zone d'affinage par une zone intermédiaire, notamment un corset (7), dans lequel on agite la masse du verre en fusion dans la zone intermédiaire ou juste à côté, sur essentiellement toute la largeur du bassin, par une agitation horizontale, caractérisé en ce qu'on agite la masse de verre sélon un mouvement elliptique, par au moins un agitateur (8, 13, 14) d'une série de boucles (10) essentiellement verticales, le plan de chaque boucle étant incliné par rapport à l'axe de l'agitateur.

2. Dispositif pour la fusion du verre avant la coulée sur un bain de flottage, comprenant un four de fusion (1) avec un bassin comportant une zone de fusion (3) une zone d'affinage (4) et une zone d'homogénéisation (5) séparée de la zone d'affinage par une zone intermédiaire, notamment un corset (7), des moyens (8, 13, 14) procurant une agitation horizontale de la masse de verre en fusion, les moyens d'agitation étant disposés au niveau du corset ou juste à côté, et étant constitués d'au moins un agitateur horizontal (8, 13, 14) s'étendant sur essentiellement toute la largeur du bassin, caractérisé en ce que l'agitateur (8, 13, 14) est formé d'une série de boucles (10) essentiellement verticales, le plan de chaque boucle étant incliné par rapport à l'axe de l'agitateur et en ce que des moyens procurent à chaque point de l'agitateur (8, 13, 14) un mouvement elliptique dans un plan horizontal.

3. Dispositif selon la revendication 2, caractérisé en ce que les boucles (10) sont surmontées d'un tube horizontal (9).

4. Dispositif selon une des revendications 2 à 3, caractérisé en ce qu'il comprend deux agitateurs horizontaux (13, 14), chacun d'eux opérant sur essentiellement la moitié du bain de verre en fusion en étant monté chacun d'un côté du four.

5. Dispositif selon la revendication 4, caractérisé en ce que le mouvement elliptique des deux agitateurs (13, 14) est synchronisé.

6. Dispositif selon une des revendications 4 ou 5, caractérisé en ce que les deux agitateurs (13, 14) sont légèrement décalés l'un par rapport à l'autre, leurs extrémités se recouvrant.

7. Dispositif selon une des revendications 2 à 6, caractérisé en ce que l'agitateur (8, 13, 14) est formé d'une série de tubes formant une conduite continue dans laquelle circule un fluide de refroidissement, de préférence de l'eau.

8. Dispositif selon une des revendications 2 à 7, caractérisé en ce que les moyens procurant le mouvement elliptique à l'agitateur comprennent un plateau (48) à mouvements croisés.

9. Dispositif selon une des revendications 2 à 8, caractérisé en ce qu'il comprend des moyens de réglage (55, 63) du mouvement elliptique.

10. Dispositif selon une des revendications 2 à 9, caractérisé en ce que l'agitateur (8, 13, 14) est monté sur un bâti (38) comprenant une table élévatrice (37).

11. Dispositif selon une des revendications 2 à 10, caractérisé en ce que l'agitateur (8, 13, 14) est monté sur un chariot pouvant se déplacer transversalement par rapport à l'axe du four.

12. Dispositif selon une des revendications 2 à 11, caractérisé en ce que l'agitateur (8, 13, 14) presente un coude (100) tel que la partie agissante de l'agitateur est disposée à un niveau inférieur à celui de la partie de l'agitateur à l'extérieur du four.

13. Dispositif selon une des revendications 2 à 12, caractérisé en ce que le tube horizontal (9) surmontant les boucles (10) est immergé partiellement dans le verre en fusion et forme un barrage pour le courant de verre supérieur.

## Claims

1. Process for melting glass prior to pouring onto a float bath, in a melting furnace (1) having a tank with a melting zone (3), a refining zone (4) and a homogenization zone (5) separated from the refining zone by an intermediate zone, particularly a collar (7), in which the melted glass mass is stirred in or adjacent to the intermediate zone over essentially the entire width of the tank by horizontal stirring, characterized in that the glass mass is stirred in accordance with an elliptical movement by at least one stirrer (8, 13, 14) formed by a row of essentially vertical loops (10), the plane of each loop being inclined with respect to the stirrer axis.

2. Apparatus for melting glass prior to pouring onto a float bath, comprising a melting furnace (1) with a tank having a melting zone (3), a refining zone (4) and a homogenization zone (5) separated from the refining zone by an intermediate zone, particularly a collar (7), means (13, 14) bringing about a horizontal stirring of the melted glass mass, the stirring means being positioned level with the collar or immediately adjacent thereto and are constituted by at least one horizontal stirrer (8, 13, 14) extending essentially over the entire width of the tank, characterized in that the stirrer (8, 13, 14) is formed by a row of essentially vertical loops (10), the plane of each loop being inclined with respect to the stirrer axis and in that at each point of the stirrer (8, 13, 14) means bring about an elliptical movement in a horizontal plane.

3. Apparatus according to claim 2, characterized in that the loops (10) are surmounted by a horizontal tube (9).

4. Apparatus according to one of the claims 2 or 3, characterized in that it comprises two horizontal stirrers (13, 14), each of them operating essentially on half the melted glass bath, each being mounted on one side of the furnace.

5. Apparatus according to claim 4, characterized in that the elliptical movement of the two stirrers (13, 14) is synchronized.

6. Apparatus according to one of the claims 4 or 5, characterized in that the two stirrers (13, 14) are slightly reciprocally displaced, their ends overlapping.

7. Apparatus according to one of the claims 2 to 6, characterized in that the stirrer (8, 13, 14) is formed by a row of tubes forming a continuous duct in which flows a cooling fluid, preferably water.

8. Apparatus according to one of the claims 2 to 7, characterized in that the means giving the stirrer the elliptical movement comprise a plate (48) with crossed movements.

9. Apparatus according to one of the claims 2 to 8, characterized in that it comprises means (55, 63) for regulating the elliptical movement.

10. Apparatus according to one of the claims 2 to 9, characterized in that the stirrer (8, 13, 14) is mounted on a frame (38) incorporating a lifting table (37).

11. Apparatus according to one of the claims 2 to 10, characterized in that the stirrer (8, 13, 14) is mounted on a carriage (15) able to move transversely with respect to the axis of the furnace.

12. Apparatus according to one of the claims 2 to 11, characterized in that the stirrer (8, 13, 14) has a bend (100), such as the active part of the stirrer is positioned at a level lower than that of the stirrer part located outside the furnace.

13. Apparatus according to one of the claims 2 to 12, characterized in that the horizontal tube (9) surmounting the loops (10) is partly immersed in the melted glass and forms a barrier for the upper glass stream.

**Ansprüche**

1. Verfahren zum Schmelzen von Glas in einem Schmelzofen vor dem Gießen auf ein Floatbad, wobei der Schmelzofen (1) eine Wanne mit einer Schmelzzone (3), einer Läuterzone (4) und einer von der Läuterzone durch eine Zwischenzone, nämlich eine Einschnürung (7) getrennte Homogenisierzone (5) aufweist, und wobei die geschmolzene Glasmasse in der Zwischenzone oder ganz an deren Rand im wesentlichen über die ganze Breite der Wanne durch horizontales Durchmischen durchgerührt wird, **dadurch gekennzeichnet, daß** die Glasmasse durch wenigstens ein Rührelement (8, 13, 14), das aus einer Reihe von im wesentlichen vertikalen Schlaufen (10) gebildet ist, wobei die Ebene jeder Schlaufe bezüglich der Rührelementachse geneigt ist, gemäß einer elliptischen Bewegung durchgerührt wird.

2. Vorrichtung zum Schmelzen von Glas vor dem Gießen auf ein Floatbad, wobei die Vorrichtung einen Schmelzofen (1) mit einer Wanne mit einer Schmelzzone (3), einer Läuterzone (4) und einer von der Läuterzone durch eine Zwischenzone, nämlich eine Einschnürung (7) getrennte Homogenisierzone (5), und eine Einrichtung für eine horizontale Durchmischung der Glasschmelze aufweist, wobei die Rühreinrichtung auf der Höhe der Einschnürung oder ganz an deren Rand angeordnet ist und aus wenigstens einem sich im wesentlichen über die ganze Breite der Wanne erstreckenden, horizontalen Rührelement (8, 13, 14) gebildet ist, **dadurch gekennzeichnet, daß** das Rührelement (8, 13, 14) eine Reihe von im wesentlichen vertikalen Schlaufen (10) aufweist, wobei die Ebene jeder Schlaufe bezüglich der Rührelementachse geneigt ist, **und daß** Vorrichtungen in jedem Punkt der Rühreinrichtung (8, 13, 14) eine elliptische Bewegung in einer horizon-

3. Vorrichtung nach Anspruch 2, **dadurch gekennzeichnet, daß** die Schlaufen (10) von einem horizontalen Rohr (9) überbrückt werden.

4. Vorrichtung nach einem der Ansprüche 2 bis 3, **dadurch gekennzeichnet, daß** sie zwei horizontale Rührerelemente (13, 14) aufweist, von denen jedes im wesentlichen auf die Hälfte der Glasschmelzenbades einwirkt, wobei jeweils eines an einer Seite des Ofens angebracht ist.

5. Vorrichtung nach Anspruch 4, **dadurch gekennzeichnet, daß** die elliptische Bewegung der beiden Rührelemente (13, 14) synchronisiert ist.

6. Vorrichtung nach einem der Ansprüche 4 oder 5, **dadurch gekennzeichnet, daß** die beiden Rührelemente (13, 14) gegenseitig leicht versetzt angeordnet sind, wobei sich ihre Enden überlappen.

7. Vorrichtung nach einem der Ansprüche 2 bis 6, **dadurch gekennzeichnet, daß** das Rührelement (8, 13, 14) aus einer Reihe von Rohren besteht, die eine Leitung bilden, in der eine Kühlflüssigkeit, vorzugsweise Wasser, zirkuliert.

8. Vorrichtung nach einem der Ansprüche 2 bis 7, **dadurch gekennzeichnet, daß** die Vorrichtung zum Beaufschlagen des Rührelements mit der elliptischen Bewegung eine Platte (48) für Kreuzbewegungen aufweist.

9. Vorrichtung nach einem der Ansprüche 2 bis 8, **dadurch gekennzeichnet, daß** sie Vorrichtungen (55, 63) für die Steuerung der elliptischen Bewegung aufweist.

10. Vorrichtung nach einem der Ansprüche 2 bis 9, **dadurch gekennzeichnet, daß** das Rührelement (8, 13, 14) auf einem einen Hebetisch (37) aufweisenden Gehäuse (38) angeordnet ist.

11. Vorrichtung nach einem der Ansprüche 2 bis 10, **dadurch gekennzeichnet, daß** das Rührelement (8, 13, 14) auf einem Rollwagen (15) angeordnet ist, der quer zur Ofenachse verschoben werden kann.

12. Vorrichtung nach einem der Ansprüche 2 bis 11, **dadurch gekennzeichnet, daß** das Rührelement (8, 13, 14) ein Knickbereich (100) ist, wobei der das Rührelement aktivierende Bereich in einer weiter unten als der Rührbereich gelegenen Ebene außen am Ofen angeordnet ist.

13. Vorrichtung nach einem der Ansprüche 2 bis 12, **dadurch gekennzeichnet, daß** das die Schlaufen (10) überbrückende, horizontale Rohr (9) teilweise in die Glasschmelze eingetaucht ist und eine Sperre für den oberern Glasstrom bildet.

FIG.1

FIG.2

## FIG_3

## FIG_4

FIG.5

FIG.6

FIG.7

FIG.8

EP 0 264 327 B1

FIG_9